(19) Europäisches Patentamt / European Patent Office / Office européen des brevets

(11) **EP 4 256 375 B1**

(12) **FASCICULE DE BREVET EUROPEEN**

(45) Date de publication et mention de la délivrance du brevet:
**09.04.2025 Bulletin 2025/15**

(21) Numéro de dépôt: **21815472.2**

(22) Date de dépôt: **17.11.2021**

(51) Classification Internationale des Brevets (IPC):
**G01S 13/931** *(2020.01)* **H01Q 1/32** *(2006.01)*
**H01Q 1/42** *(2006.01)* **H01Q 19/06** *(2006.01)*

(52) Classification Coopérative des Brevets (CPC):
**G01S 13/931; H01Q 1/3233; H01Q 1/422; H01Q 19/06;** G01S 2013/93277

(86) Numéro de dépôt international:
**PCT/EP2021/082050**

(87) Numéro de publication internationale:
**WO 2022/117350 (09.06.2022 Gazette 2022/23)**

(54) **ENSEMBLE DE VÉHICULE COMPRENANT UN CAPTEUR RADAR ET UN AGENCEMENT DE COUCHES**

FAHRZEUGANORDNUNG MIT EINEM RADARSENSOR UND EINER ANORDNUNG VON SCHICHTEN

VEHICLE ASSEMBLY COMPRISING A RADAR SENSOR AND AN ARRANGEMENT OF LAYERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2020 FR 2012489**

(43) Date de publication de la demande:
**11.10.2023 Bulletin 2023/41**

(73) Titulaire: **VALEO VISION**
**93012 Bobigny Cedex (FR)**

(72) Inventeurs:
• **ALBOU, Pierre**
**93012 BOBIGNY (FR)**
• **RENAUD, Pierre**
**93012 Bobigny - Cedex (FR)**
• **PERDRIX, Lucas**
**93012 Bobigny - Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
**EP-A1- 3 644 087       US-A1- 2007 109 206**
**US-A1- 2019 018 104**

## Description

La présente invention se rapporte à un ensemble de véhicule. Elle trouve une application particulière mais non limitative dans les véhicules automobiles.

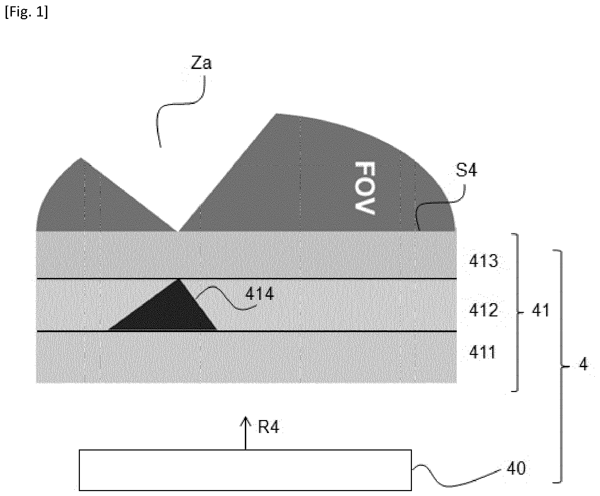

Un ensemble de véhicule 4 illustré sur la figure 1 comprend, de manière connue de l'homme du métier :

- un capteur radar 40 configuré pour émettre des ondes radars R4,
- un agencement de couches 41 comprenant une couche primaire 411 disposée en regard dudit capteur radar 41, une couche secondaire 412 présentant un relief 414, adjacente à la couche primaire 411, et une couche tertiaire 413 comprenant une surface de sortie S4 des ondes radars R4, la couche primaire 411, la couche secondaire 412, la couche tertiaire 413 comprenant chacun un indice de réfraction différent.

Le capteur radar 40 est conçu pour avoir un champ de vision FOV déterminé. Il détecte un objet dans l'environnement extérieur du véhicule automobile.

Un inconvénient de cet état de la technique est qu'en raison du relief 414, cela crée un effet de prisme qui gêne l'émission des ondes radars R4. Ces dernières sont déviées lorsqu'elles traversent l'agencement de couches 41. En conséquence le champ de vision FOV du capteur radar 40 comprend une zone aveugle Za. Cela entraîne qu'un objet qui se trouve dans l'environnement extérieur du véhicule à l'intérieur de la zone aveugle Za automobile peut ne pas être

détecté. Le document US 2007/109206A1 divulgue un radar et un agencement de couches disposé en regard du radar selon l'état de la technique.

Dans ce contexte, la présente invention vise à proposer un ensemble de véhicule qui permet de résoudre l'inconvénient mentionné.

A cet effet, l'invention définie par la revendication 1 propose un ensemble de véhicule pour véhicule, ledit ensemble de véhicule comprenant :

- un capteur radar configuré pour émettre des ondes radars,
- un agencement de couches comprenant une couche primaire, disposée en regard dudit capteur radar et comprenant une surface d'entrée des ondes radars, une couche secondaire comprenant au moins un relief, ladite couche secondaire étant adjacente à la couche primaire et comprenant une surface de jonction primaire avec ladite couche primaire et une surface de jonction secondaire avec une couche tertiaire adjacente, et ladite couche tertiaire comprenant une surface de sortie des ondes radars parallèle à ladite surface d'entrée, la couche primaire, la couche secondaire, la couche tertiaire comprenant respectivement un indice de réfraction primaire, un indice de réfraction secondaire, et un indice de réfraction tertiaire, l'indice de réfraction secondaire et l'indice de réfraction tertiaire étant égaux si la surface de jonction primaire est parallèle à la surface d'entrée et à la surface de sortie et si la couche secondaire présente ledit relief sur ladite surface de jonction secondaire, ou les indices de réfraction des couches non adjacentes étant égaux si la couche secondaire présente un relief sur ladite surface de jonction secondaire et un relief sur ladite surface de jonction primaire et si la surface de jonction primaire est parallèle à la surface de jonction secondaire

caractérisé en ce que ladite surface d'entrée (S1) et ladite surface de sortie (S3) sont courbes et présentent un rayon de courbure Rm=γ*E(da)max, avec E l'épaisseur de l'agencement de couches (11),(da)max une tolérance d'erreur de localisation angulaire dudit capteur radar, γ un facteur fonction du plus grand angle du champ de vision (FOV) dudit capteur radar et de l'indice de réfraction tertiaire de ladite couche tertiaire.

Selon des modes de réalisation non limitatifs, ledit ensemble de véhicule peut comporter en outre une ou plusieurs caractéristiques supplémentaires prises seules ou selon toutes les combinaisons techniquement possibles, parmi les suivantes.

Selon un mode de réalisation non limitatif, ledit capteur radar est un capteur radar à ondes millimétriques ou hyperfréquences ou micro-ondes.

Selon un mode de réalisation non limitatif, l'indice de réfraction secondaire et l'indice de réfraction primaire sont égaux si la surface de jonction primaire est parallèle à la surface d'entrée et à la surface de sortie et si la couche secondaire présente ledit relief sur ladite surface de jonction secondaire.

Selon un mode de réalisation non limitatif, ladite couche secondaire comprend une épaisseur au moins dix fois inférieure à celle de la couche primaire et de la couche tertiaire.

Selon un mode de réalisation non limitatif, ladite couche primaire est une couche optique, ladite couche secondaire est une couche de film ou une couche opalescente, et ladite couche tertiaire est une glace de sortie.

Selon un mode de réalisation non limitatif, ledit agencement de couches forme un logo illuminé ou un radôme.

L'invention définie par la revendication 7 propose un agencement de couches disposé en regard d'un capteur radar, ledit capteur radar étant configuré pour émettre des ondes radars, ledit agencement de couches comprenant une couche primaire, disposée en regard dudit capteur radar et comprenant une surface d'entrée des ondes radars, une couche secondaire comprenant au moins un relief, ladite couche secondaire étant adjacente à la couche primaire et comprenant une surface de jonction primaire avec ladite couche primaire et une surface de jonction secondaire avec une couche tertiaire adjacente, et ladite couche tertiaire comprenant une surface de sortie des ondes radars parallèle à ladite surface d'entrée, la couche primaire, la couche secondaire, la couche tertiaire comprenant respectivement un indice de réfraction primaire, un indice de réfraction secondaire, et un indice de réfraction tertiaire, l'indice de réfraction secondaire et l'indice de réfraction tertiaire étant égaux si la surface de jonction primaire est parallèle à la surface d'entrée et à la surface de sortie et si la couche secondaire présente ledit relief sur ladite surface de jonction secondaire, ou les indices de réfraction des couches non adjacentes étant égaux si la couche secondaire présente un relief sur ladite surface de jonction secondaire et un relief sur ladite surface de jonction primaire et si la surface de jonction primaire est parallèle à la surface de jonction secondaire caractérisé en ce que ladite surface d'entrée et ladite surface de sortie sont courbes et présentent un rayon de courbure Rm=γ*E(da) max, avec E l'épaisseur de l'agencement de couches,(da)max une tolérance d'erreur de localisation angulaire dudit capteur radar, γ un facteur fonction du plus grand angle du champ de vision (FOV) dudit capteur radar et de l'indice de réfraction tertiaire de ladite couche tertiaire.

L'invention et ses différentes applications seront mieux comprises à la lecture de la description qui suit et à l'examen des figures qui l'accompagnent :

> [Fig. 1] est une figure schématique d'un ensemble de véhicule comprenant un capteur radar et un agencement de couches selon un état de la technique antérieur,

> [Fig. 2] est une vue schématique d'un ensemble de véhicule, ledit ensemble de véhicule comprenant un capteur radar et un agencement de couches,

> [Fig. 3] est une vue schématique de l'agencement de couches de l'ensemble de véhicule de la figure 2, ledit ensemble de couches comprenant une couche primaire, une couche secondaire avec un relief, et une couche tertiaire,

> [Fig. 4] est une vue schématique de l'agencement de couches de l'ensemble de véhicule de la figure 2, ledit ensemble de couches comprenant une couche primaire, une couche secondaire avec un relief, et une couche tertiaire,

> [Fig. 5] est une vue schématique de deux ondes radar émises par le capteur de l'ensemble de véhicule de la figure 2, dont l'une traverse une couche primaire, une couche secondaire et une couche tertiaire de l'agencement de couches de la figure 2 sans passer par la pente d'un relief de la couche secondaire, et l'autre traverse ladite couche primaire, ladite couche secondaire et ladite couche tertiaire en passant par la pente dudit relief de la couche secondaire,

> [Fig. 6] est une vue schématique de l'agencement de couches de l'ensemble de véhicule de la figure 2, ledit ensemble de couches comprenant une couche primaire, une couche secondaire avec un relief, et une couche tertiaire.

Les éléments identiques, par structure ou par fonction, apparaissant sur différentes figures conservent, sauf précision contraire, les mêmes références.

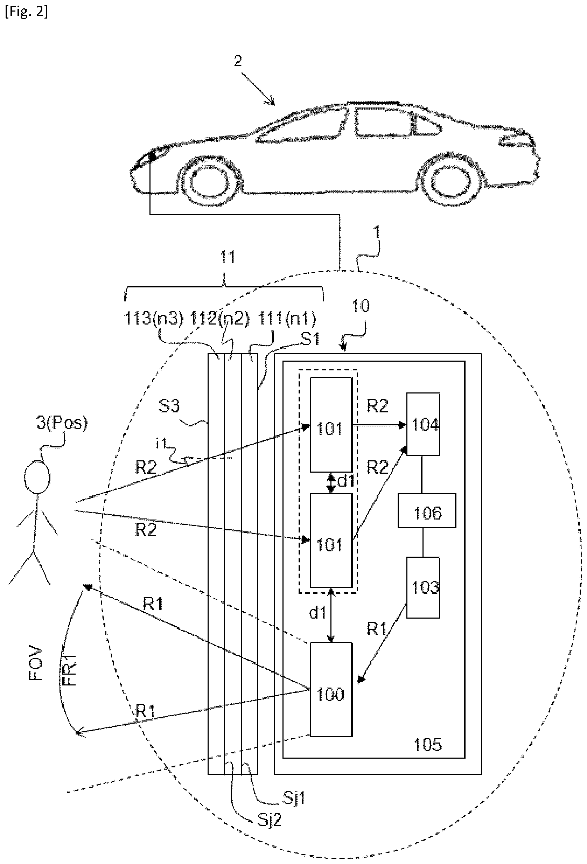

L'ensemble de véhicule 1 d'un véhicule 2 est décrit en référence aux figures 2 à 6. L'ensemble de véhicule 1 est autrement appelé système de véhicule 1. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2. Dans un mode de réalisation non limitatif, l'ensemble de véhicule 1 est intégré dans la grille du véhicule automobile 2. Dans un autre mode de réalisation non limitatif, l'ensemble de véhicule 1 peut être intégré à une pièce de carrosserie située à l'arrière du véhicule automobile 2.

Tel qu'illustré sur la figure 2, l'ensemble de véhicule 1, autrement appelé agencement de véhicule 1, comprend :

- un capteur radar 10 configuré pour émettre des ondes radars R1,
- un agencement de couches 11.

Ces éléments sont décrits ci-après.

Le capteur radar 10 est décrit ci-après. Tel qu'illustré sur la figure 2, le capteur radar 10 est disposé en regard de l'agencement de couches 11. Dans un mode de réalisation non limitatif, le capteur radar 10 est un capteur radar à ondes millimétriques (entre 24GHz et 300 GHz) ou hyperfréquences (entre 300MHz et 81GHz) ou micro-ondes (entre 1GHz et 300GHz). Dans une variante de réalisation non limitative, le capteur radar 10 fonctionne à une fréquence radar comprise entre 76GHz et 81GHz. Dans un mode de réalisation non limitatif, les ondes radars R1 sont émises sur une bande de fréquence comprise entre 100MHz et 5GHz. Ainsi, dans un exemple non limitatif, si le capteur radar 10 fonctionne à une fréquence radar de 77GHz, soit une longueur d'onde $\lambda$ de 3.95mm, avec une bande de fréquence de 1GHz, le capteur radar 10 fonctionnera sur une bande de fréquence de 76.5GHZ à 77.5GHz. Les ondes radars R1 seront ainsi émises sur la plage de fréquence 76.5GHZ à 77.5GHz, soit une plage $\Delta 1$ de longueurs d'onde $\lambda$ de 3.87mm à 3.92mm. Ainsi, dans autre un exemple non limitatif, si le capteur radar 10 fonctionne à une fréquence radar de 78.5GHz avec une bande de fréquence de 5GHz, le capteur radar 10 fonctionnera sur une bande de fréquence de 76GHZ à 81GHz. Les ondes radars R1 seront ainsi émises sur la plage de fréquence 76GHZ à 81GHz, soit une plage Δ1 de longueurs d'onde λ de 3.701mm à 3.945mm.

Tel qu'illustré sur la figure 2, le capteur radar 10 possède un champ de vision FOV. les ondes radars R1 émises arrivent avec un angle d'incidence θ sur l'agencement de couches 11. Dans un mode de réalisation non limitatif, l'angle d'incidence θ est compris entre 0° et +-30°. Le champ de vision FOV varie ainsi entre -30° et +30°. Le centre du champ de vision FOV est un angle de 0° par rapport à l'axe longitudinal du véhicule, autrement appelé axe du véhicule. Dans un autre mode de réalisation non limitatif, le champ de vision FOV varie ainsi entre -90° et +45°. Le centre du champ de vision FOV est un angle de -45° par rapport à l'axe du véhicule et l'angle d'incidence θ des ondes radars R1 sur l'agencement de couches 11 restent proches de 0° (l'ensemble de véhicule 1 étant positionné alors à environ 45° de l'axe du véhicule).Le capteur radar 10 émet les ondes radars R1 dans son champ de vision FOV selon un faisceau d'émission FR1. Le faisceau d'émission FR1 définit le champ de vision FOV du capteur radar 10.

Le capteur radar 10 est configuré pour scanner l'environnement extérieur du véhicule automobile 2, grâce à l'émission d'ondes radars R1. Tel qu'illustré sur la figure 2, le capteur radar 10 comprend ainsi :

- au moins une antenne émettrice 100 configurée pour émettre des ondes radars R1, autrement appelées ondes radars primaires R1, ou ondes radars émises R1.
- au moins deux antennes réceptrices 101 configurées pour recevoir des ondes radars de retour R2, autrement appelées ondes radars R2 ou ondes radars secondaires R2.

Le capteur radar 10 comprend en outre au moins un émetteur 103 configuré pour générer les ondes radars primaires R1 et au moins un récepteur 104 configuré pour traiter les ondes radars secondaires R2 reçues en retour. Dans un mode de réalisation non limitatif, un seul composant électronique peut être utilisé pour les deux fonctions émission et réception. On aura ainsi un ou plusieurs émetteur/récepteur appelés « transceiver » dans le langage anglo-saxon. Ledit émetteur 103 génère des ondes radars primaires R1 qui sont par la suite émises par l'antenne émettrice 100, qui lorsqu'elles rencontrent un objet 3 (ici un piéton dans l'exemple non limitatif illustré) dans l'environnement extérieur du véhicule automobile 2 se réfléchissent sur ledit objet 3. On notera que l'objet 3 est autrement appelé objet cible 3. Les ondes radars ainsi réfléchies sont des ondes transmises en retour au capteur radar 10. Ce sont les ondes radars secondaires R2 reçues par les antennes réceptrices 101. Ce sont des ondes radars retransmises en direction du capteur radar 10. Dans un mode de réalisation non limitatif, les ondes radars primaires R1 et les ondes radars secondaires R2 sont des ondes radio fréquence. Dans un mode de réalisation non limitatif, le capteur radar 10 comprend une pluralité d'émetteurs 103 et une pluralité de récepteurs 104.

L'antenne émettrice 100, autrement appelée antenne 100, est configurée pour émettre les ondes radars primaires R1 générées par l'émetteur 103. Les antennes réceptrices 101, autrement appelées antennes 101, sont configurées pour recevoir les ondes radars secondaires R2 et les communiquer au récepteur 104 qui les traite par la suite. Il existe un déphasage Δφ, autrement appelé différence de phase Δφ, entre les ondes radars secondaires R2 reçues par les antennes réceptrices 101 qui permet d'en déduire la position angulaire Pos de l'objet 3 par rapport au véhicule automobile 2, objet 3 qui se trouve dans l'environnement extérieur du véhicule automobile 2. Dans des modes de réalisation non limitatifs, les antennes 100, 101 sont des antennes pastilles autrement appelée dans le langage anglo-saxon « patch antenna » ou des antennes à fente autrement appelée dans le langage anglo-saxon « slot antenna ».

Dans un mode de réalisation non limitatif, les antennes 100, 101, l'émetteur 103 et le récepteur 104 sont disposés sur une carte à circuit imprimé 105. Dans un mode de réalisation non limitatif, la carte à circuit imprimé est une carte à circuit imprimé rigide autrement appelée PCBA (« Printed Circuit Board Assembly » dans le langage anglo-saxon ou une carte à circuit imprimé flexible, autrement appelé « Flexboard » dans le langage anglo-saxon.

Le capteur radar 10 comprend en outre une unité de contrôle électronique 106 configurée pour contrôler l'émetteur 103 et le récepteur 104. Un capteur radar étant connu de l'homme du métier, il n'est pas décrit plus en détail ici. Dans des modes de réalisation non limitatif, le déphasage Δφ est mesuré par l'unité de contrôle électronique 106 ou par le récepteur 104.

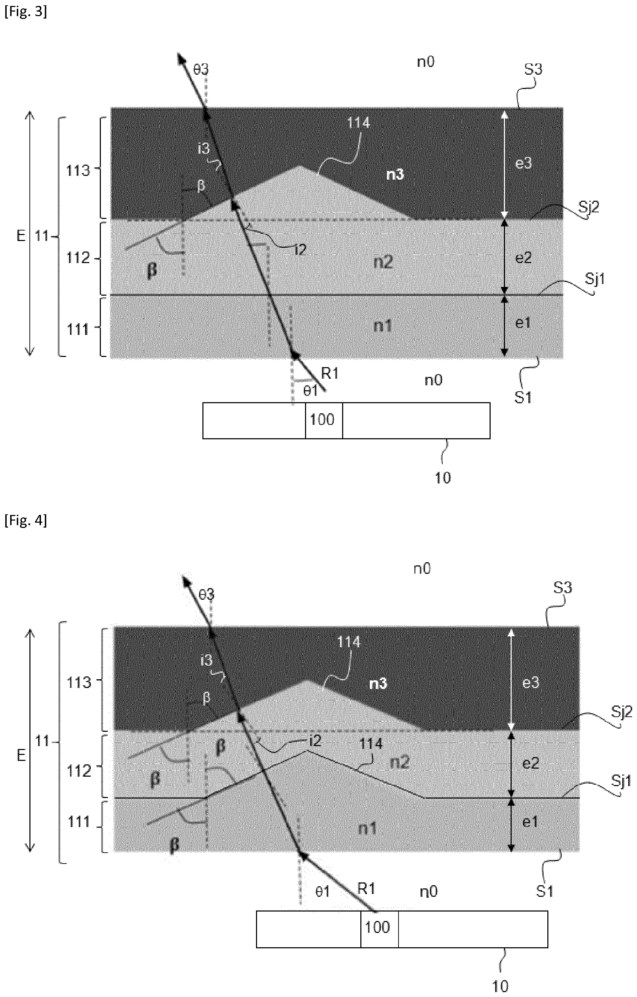

L'agencement de couches 11 est décrit ci-après. Tel qu'illustré sur les figures 3 à 6, il comprend :

- une couche primaire 111,
- une couche secondaire 112 comprenant au moins un relief 114,
- une couche tertiaire 113.

Dans un mode de réalisation non limitatif, l'agencement de couches 11 est un logo illuminé ou un radôme.

La couche primaire 111 est disposée en regard du capteur radar 10 et comprend une surface de d'entrée S1 des ondes radars R1. La surface d'entrée S1 forme un dioptre entre le matériau de la couche primaire 111 qui comprend un indice de réfraction n1 et l'air qui possède un indice de réfraction n0=1. Les ondes radars R1 arrivent sur ce dioptre S1 avec un angle d'incidence θ1. Elles traversent la couche primaire 111, la couche secondaire 112 et la couche tertiaire 113. Elles ressortent de la couche tertiaire 113 avec un angle d'incidence θ3. L'indice de réfraction n1 est autrement appelé indice de réfraction primaire n1.

Dans un mode de réalisation non limitatif, la couche primaire 111 est une couche optique. La couche optique 111 permet de transmettre les rayons lumineux d'une ou plusieurs sources de lumières (non illustrées). La couche optique 111 forme un élément diélectrique. Dans des modes de réalisation non limitatifs, l'élément diélectrique est formé d'un matériau en plastique, en verre ou en céramique. Dans un exemple non limitatif, le plastique est du polycarbonate (PC). On rappelle qu'un matériau diélectrique est non conducteur et laisse donc passer les ondes radars R1 contrairement à un matériau conducteur. La couche optique 111 est une couche transparente pour le capteur radar 10, à savoir pour les ondes radars R1, R2. Dans des modes de réalisation non limitatifs, la couche optique 111 peut être un guide de lumière ou une lentille.

La couche secondaire 112 est disposée entre la couche primaire 111 et la couche tertiaire 113. Elle est adjacente à la couche primaire 111 et à la couche tertiaire 113. La couche secondaire 112 comprend ainsi une surface de jonction primaire Sj1 (autrement appelée surface de jonction Sj1) avec la couche primaire 111 et une surface de jonction secondaire Sj2 (autrement appelée surface de jonction Sj2) avec la couche tertiaire 113. Elle comprend un indice de réfraction n2, autrement appelée indice de réfraction secondaire n2. La couche secondaire 112 présente un relief 114 qui permet de réaliser un motif en 3D. Ce relief 114 une forme en 3D. Cette forme en 3D est imposée par les constructeurs automobiles, souvent pour des raisons de style, et est donc liée au véhicule automobile 2. Dans un exemple non limitatif illustré sur les figures 3, 4, et 6, le relief 114 est un prisme. Il a une forme pyramidale. Dans un autre exemple non limitatif non illustré, le relief 114 a une forme en trapèze. Dans un autre exemple non limitatif non illustré, le relief 114 peut être une pente. Ainsi, dans le cas d'un logo illuminé, la couche secondaire 112 permet de réaliser le motif dudit logo illuminé. Tel qu'illustré sur les figures 3, 4 et 6, le(s) relief(s) 114 forme un angle β par rapport à la normale à une surface de jonction Sj1, Sj2. On notera que plus l'angle β est faible, plus la pente du relief 114 est importante. La couche secondaire 112 est transparente au capteur radar 10.

Dans un mode de réalisation non limitatif, la couche secondaire 112 est une couche de film coloré. Dans une variante de réalisation non limitative, elle est environ égale à 0.4mm. Dans ce cas, dans un exemple non limitatif, la couche de film 112 peut être déposée sur la couche primaire 111 pré-moulée puis être surmoulée avec le même matériau que la couche primaire 111 pour réaliser la couche tertiaire 113.

Dans un mode de réalisation non limitatif, la couche secondaire 112 est une couche opalescente. Dans une variante de réalisation non limitative, elle est environ égale à 2.5mm. Dans ce cas, dans un exemple non limitatif, la couche secondaire 112 est réalisée par multi-injections.

La couche tertiaire 113 est adjacente à la couche secondaire 112. Elle est disposée du côté opposé au capteur radar 10, à savoir du côté de l'extérieur du véhicule automobile 2. Dans un mode de réalisation non limitatif, la couche tertiaire 113 est une glace de sortie. Dans un mode de réalisation non limitatif, la couche tertiaire 113 est en plastique. Dans un exemple non limitatif, le plastique est du polycarbonate (PC). La couche tertiaire 113 comprend une surface de sortie S3 des ondes radars R1. La surface de sortie S3 est parallèle à la surface d'entrée S1. La couche tertiaire 113 est transparente au capteur radar 10 et à la lumière visible.

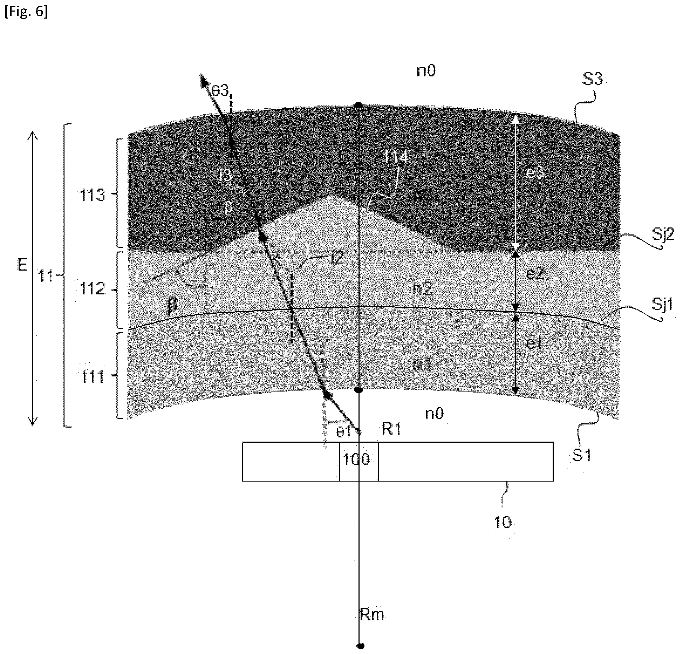

Dans un mode de réalisation non limitatif illustré sur les figures 3 et 6, la couche secondaire 112 comprend un relief 114 sur la surface de jonction secondaire Sj2. Dans un mode de réalisation non limitatif illustré sur la figure 4, la couche secondaire 112 comprend deux reliefs 114, dont l'un sur la surface de jonction secondaire Sj2 et l'autre sur la surface de jonction primaire Sj1.

Dans un mode de réalisation non limitatif illustré sur la figure 3, la couche secondaire 112 comprend ainsi ledit relief 114 sur la surface de jonction secondaire Sj2. La surface de jonction primaire Sj1 ne comprend aucun relief 114. La surface de jonction primaire Sj1 n'est pas parallèle à la surface de jonction secondaire Sj2. La surface de sortie S3 et la surface d'entrée S1 qui sont parallèles entre elles sont planes. Par ailleurs, la surface de jonction primaire Sj1 est parallèle à la surface d'entrée S1 et la surface de sortie S3. Dans ce mode de réalisation non limitatif, n2=n3. Ainsi, l'indice de réfraction secondaire n2 et l'indice de réfraction tertiaire n3 sont égaux si la surface de jonction primaire Sj1 est parallèle à la surface d'entrée S1 et à la surface de sortie S3 et si la couche secondaire 112 présente ledit relief 114 sur ladite surface de jonction secondaire Sj2. En ayant n2=n3, l'agencement de couches 11 est vue par le capteur radar 10 comme un agencement de couches équivalent qui comprend deux couches (la couche secondaire 112 et la couche tertiaire 113) avec des surfaces S3, Sj2, Sj1 parallèles entre elles. On obtient alors θ3=θ1. Si l'indice de réfraction secondaire n2 était différent de l'indice de réfraction tertiaire n3 comme dans l'état de la technique antérieur, on aurait l'angle d'incidence θ3 différent de l'angle d'incidence θ1 avec θ3 d'autant plus différent de θ1 que l'angle β est petit. Plus β est petit, plus la zone aveugle Za vue dans l'état de la technique antérieur, autrement appelée zone d'ombre, du champ de vision FOV est importante. Ainsi, en prenant n2=n3, même en présence d'un relief 114 sur la couche secondaire 112, il n'y a plus de zone aveugle Za dans le champ de vision FOV du capteur radar 10. On notera qu'on a alors n2sin i2 = n3 sin i3, avec i2 l'angle d'incidence de l'onde radar R1 par rapport à la surface du relief 114 et i3 l'angle réfracté correspondant. Et donc i3=i2. Il n'y a donc pas de déviation de l'onde radar R1 entre la couche secondaire 112 et la couche tertiaire 113.

Dans une variante de réalisation non limitative de ce mode de réalisation non limitatif, on a par ailleurs n2=n1. Donc, on a n3=n2=n1. Ainsi, l'indice de réfraction secondaire n2 et l'indice de réfraction primaire n1 sont égaux si la surface de jonction primaire Sj1 est parallèle à la surface d'entrée S1 et à la surface de sortie S3 et si la couche secondaire 112 présente ledit relief 114 sur ladite surface de jonction secondaire Sj2. On a un agencement de couches 11 homogène pour le capteur radar 10. Le calcul de la différence de phase $\Delta\phi$ entre deux ondes radars de retour R2 est simple. On a $\Delta\phi = 2\pi.d1.\sin(i1)/\lambda$. Avec d1 la distance entre les deux antennes réceptrices 101 (illustrée sur la figure 1), et i1 l'angle d'incidence des ondes radars de retour R2 sur l'agencement de couches 11 (illustré sur la figure 1). Il n'est pas nécessaire de corriger le calcul de la différence de phase $\Delta\phi$. Il n'est pas nécessaire que l'épaisseur e2 de la couche secondaire 112 soit très petite par rapport aux épaisseurs e1, e3 de la couche primaire 111 et de la couche tertiaire 113.

Dans un mode de réalisation non limitatif illustré sur la figure 4, la couche secondaire 112 comprend un relief 114 sur la surface de jonction secondaire Sj2 et un relief 114 sur la surface de jonction primaire Sj1. En outre la surface de jonction primaire Sj1 est parallèle à la surface de jonction secondaire Sj2. La surface de sortie S3 et la surface d'entrée S1 qui sont parallèles entre elles sont planes. Dans ce deuxième mode de réalisation non limitatif, n1=n3. Ainsi, les indices de réfraction n1, n3 des couches non adjacentes (la couche primaire 111, et la couche tertiaire 113) sont égaux si la couche secondaire 112 présente deux reliefs 114 dont l'un sur ladite surface de jonction secondaire Sj2 et l'autre sur ladite surface de jonction primaire Sj1. En ayant n1=n3, l'agencement de couches 11 est vue par le capteur radar 10 comme un agencement de couches équivalent comprenant deux couches (la couche primaire 111 et la couche tertiaire 113) avec que des surfaces S3, Sj2, Sj1, S1 parallèles entre elles. On obtient alors $\theta3=\theta1$. Si l'indice de réfraction secondaire n1 était différent de l'indice de réfraction tertiaire n3 comme dans l'état de la technique antérieur, on aurait l'angle d'incidence $\theta3$ différent de l'angle d'incidence $\theta1$ avec $\theta3$ d'autant plus différent de $\theta1$ que l'angle $\beta$ est petit. Plus $\beta$ est petit, plus la zone aveugle Za vue dans l'état de la technique antérieur, autrement appelée zone d'ombre, du champ de vision FOV est importante. Ainsi, en prenant n1=n3, il n'y a plus de zone aveugle Za dans le champ de vision FOV du capteur radar 10.

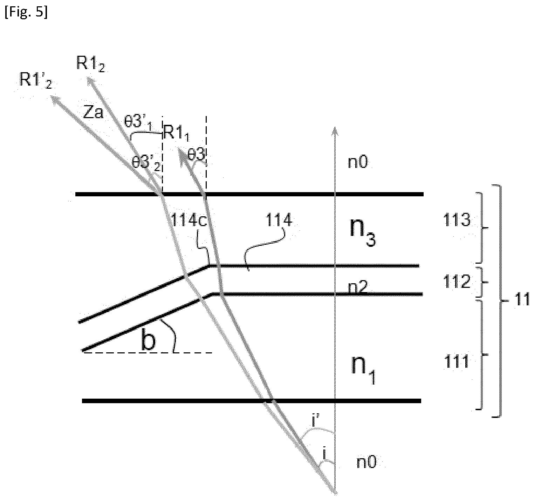

La figure 5 illustre une onde radar $R1_1$ qui traverse la couche primaire 111, la couche secondaire 112 et la couche tertiaire 113 sans passer par la pente du relief 114 et une onde radar $R1_2$ qui traverse la couche primaire 111, la couche secondaire 112 et la couche tertiaire 113 en passant par la pente du relief 114. On a : $\theta3=i$ et $\theta3'=\text{asin}(n3\sin(b-\text{asin}(n1/n3 \sin(b-\text{asin}(\sin(i')/n1)))))$, avec $\theta3$ l'angle d'incidence de l'onde radar $R1_1$ et $\theta3'$ l'angle d'incidence de l'onde radar $R1_2$ et $b = \pi/2-\beta$. Lorsque n1=n3, alors $\theta3'=i'$ (soit $\theta3_1'=i'$ tel qu'illustré sur la figure 5), et il n'y a pas de zone aveugle Za. Si ce n'est pas le cas, par exemple si n1=1.6, n3=1.8, b=30°, avec 20° la position angulaire du coin 114c du relief 114 et i et i' tendant vers cette position angulaire du coin 114c, on aurait une onde radar $R1'_2$, avec $\theta3 = i = 20°$ mais $\theta3' \neq i' = 30°$ (soit $\theta3_2' \neq i' = 30°$ tel qu'illustré sur la figure 5), et donc une zone aveugle Za de 10°. On remarquera que dans l'exemple non limitatif illustré, le relief 114 a une forme de trapèze. Ainsi, grâce à n1=n3, même en présence des reliefs 114 sur la couche secondaire 112, il n'existe plus de zone aveugle Za.

A la différence des autre modes de réalisation le mode de réalisation correspondant à l'invention est illustré sur la figure 6, la couche secondaire 112 comprend ledit relief 114 sur la surface de jonction secondaire Sj2. La surface de jonction primaire Sj1 ne comprend aucun relief 114. La surface de jonction primaire Sj1 n'est pas parallèle à la surface de jonction secondaire Sj2. La surface de sortie S3 et la surface d'entrée S1 qui sont parallèles entre elles sont courbes. Par ailleurs, la surface de jonction primaire Sj1 est parallèle à la surface d'entrée S1 et à la surface de sortie S3. On notera que le fait d'avoir la surface de sortie S3 et la surface d'entrée S1 courbes permet d'avoir un angle d'incidence $\theta1$ plus faible que si la surface de sortie S3 et la surface d'entrée S1 étaient planes. On a ainsi moins de réflexions en retour sur le capteur radar 10 et moins de perturbations pour ledit capteur radar 10. La surface d'entrée S1 et la surface de sortie S3 présentent un rayon de courbure Rm=y*E(da)max, avec E l'épaisseur de l'agencement de couches 11, (da)max une tolérance d'erreur de localisation angulaire du capteur radar 10, $\gamma$ un facteur fonction du plus grand angle du champ de vision FOV du capteur radar 10 et de l'indice de réfraction n3 de la couche tertiaire 113. On a :

$$[\text{Math 1}]$$
$$\gamma = \frac{n^2 \cos(a_{max})\sin(a_{max})}{(n^2-\sin(a_{max})^2)^{3/2}}$$

On calcule Rm pour la surface d'entrée S1 et Rm pour la surface de sortie S3. Donc n égal à n1 ou n3 et amax, la valeur maximale de $\theta1$ (pour S1) et de $\theta3$ (pour S3), avec $\theta1$ et $\theta3$ les angles d'incidence par rapport à une verticale par rapport à une parallèle à l'axe d'émission du capteur radar 10 (qui est l'axe partant de l'antenne d'émission 100 dans la direction du centre du champ de vision FOV).

Dans ce mode de réalisation non limitatif, n2=n3. Ainsi, l'indice de réfraction secondaire n2 et l'indice de réfraction tertiaire n3 sont égaux si la surface de jonction primaire Sj1 est parallèle à la surface d'entrée S1 et à la surface de sortie S3 et si la couche secondaire 112 présente ledit relief 114 sur ladite surface de jonction secondaire Sj2. En ayant n2=n3, l'agencement de couches 11 est vue par le capteur radar 10 comme un agencement de couches équivalent comprenant deux couches (la couche secondaire 112 et la couche tertiaire 113) avec que des surfaces S3, Sj2, Sj1 parallèles entre elles. On obtient alors θ3=θ1. Si l'indice de réfraction secondaire n2 était différent de l'indice de réfraction tertiaire n3 comme dans l'état de la technique antérieur, on aurait l'angle d'incidence θ3 différent de l'angle d'incidence θ1 avec θ3 d'autant plus différent de θ1 que l'angle β est petit. Plus β est petit, plus la zone aveugle Za, autrement appelée zone d'ombre, du champ de vision FOV est importante. Ainsi, en prenant n2=n3, même en présence d'un relief 114 sur la couche secondaire 112, il n'y a plus de zone aveugle Za dans le champ de vision FOV du capteur radar 10. On notera qu'on a alors n2sin i2 = n3 sin i3, avec i2 l'angle d'incidence de l'onde radar R1 par rapport à la surface du relief 114 et i3 l'angle réfracté correspondant.

Dans une variante de réalisation non limitative de ce mode de réalisation non limitatif, on a par ailleurs n2=n1. Ainsi, l'indice de réfraction secondaire n2 et l'indice de réfraction primaire n1 sont égaux si la surface de jonction primaire Sj1 est parallèle à la surface d'entrée S1 et à la surface de sortie S3 et si la couche secondaire 112 présente ledit relief 114 sur ladite surface de jonction secondaire Sj2.

On notera que lorsqu'il existe un ou plusieurs reliefs 114 tel qu'illustré sur les figures 3, 4, 6, la différence de phase mesurée Δφ entre deux ondes radars de retour R2 ne suit pas la formule classique Δφ=2π.d1.sin(i1)/λ, mais une loi plus complexe fonction de la position des antennes réceptrices 101 entre elles par rapport à l'agencement de couches 11, et du relief(s) 114. Aussi, il est classiquement nécessaire d'appliquer une loi de correction sur la mesure du déphasage Δφ effectuée pour revenir à une valeur calculée selon la formule classique. Pour éviter d'appliquer une telle loi de correction qui va changer à chaque nouveau design de l'ensemble de véhicule 1, dans un mode de réalisation non limitatif, la couche secondaire 112 comprend une épaisseur e2 au moins dix fois inférieure à celle e1, e3 de la couche primaire 111 et de la couche tertiaire 113. On notera que e1, e2 et e3 sont les épaisseurs moyennes. Ainsi, la mesure du déphasage Δφ sera suffisamment proche de la valeur calculée selon la loi classique. La différence sera négligeable.

Bien entendu la description de l'invention n'est pas limitée aux modes de réalisation décrits ci-dessus et au domaine décrit ci-dessus. Ainsi, dans un autre mode de réalisation non limitatif, le capteur radar 10 comprend plus d'une antenne émettrice 100 et plus de deux antennes réceptrices 101. Ainsi, dans un autre mode de réalisation non limitatif, l'agencement de couches 11 comprend plus de trois couches. Ainsi, dans des exemples non limitatif, l'agencement de couches 11 peut comporter une couche diffusante, et/ou une couche réfléchissante, et/ou une couche opaque.

Ainsi, l'invention décrite présente notamment les avantages suivants :

- elle permet que le calcul de la position angulaire d'un objet cible 3 ne soit pas impacté par une forme 3D d'une couche dans l'agencement de couches 11,
- elle permet de supprimer la zone aveugle Za.

## Revendications

1. Ensemble de véhicule (1) pour véhicule (2), ledit ensemble de véhicule (1) comprenant :

    - un capteur radar (10) configuré pour émettre des ondes radars (R1),
    - un agencement de couches (11) comprenant une couche primaire (111), disposée en regard dudit capteur radar (10) et comprenant une surface d'entrée (S1) des ondes radars (R1), une couche secondaire (112) comprenant au moins un relief (114), ladite couche secondaire (112) étant adjacente à la couche primaire (111) et comprenant une surface de jonction primaire (Sj1) avec ladite couche primaire (111) et une surface de jonction secondaire (Sj2) avec une couche tertiaire (113) adjacente, et ladite couche tertiaire (113) comprenant une surface de sortie (S3) des ondes radars (R1) parallèle à ladite surface d'entrée (S1), la couche primaire (111), la couche secondaire (112), la couche tertiaire (113) comprenant respectivement un indice de réfraction primaire (n1), un indice de réfraction secondaire (n2), et un indice de réfraction tertiaire (n3),
    - l'indice de réfraction secondaire (n2) et l'indice de réfraction tertiaire (n3) étant égaux si la surface de jonction primaire (Sj1) est parallèle à la surface d'entrée (S1) et à la surface de sortie (S3) et si la couche secondaire (112) présente ledit relief (114) sur ladite surface de jonction secondaire (Sj2), ou les indices de réfraction (n1, n3) des couches non adjacentes (111, 113) étant égaux si la couche secondaire (112) présente un relief (114) sur ladite surface de jonction secondaire (Sj2) et un relief (114) sur ladite surface de jonction primaire (Sj1) et si la surface de jonction primaire (Sj1) est parallèle à la surface de jonction secondaire (Sj2) ;

    **caractérisé en ce que** ladite surface d'entrée (S1) et ladite surface de sortie (S3) sont courbes et présentent un rayon de courbure Rm=γ*E(da)max, avec E l'épaisseur de l'agencement de couches (11), (da) max une tolérance d'erreur de localisation angulaire dudit capteur radar (10), γ un facteur fonction du plus grand angle du champ de vision (FOV) dudit capteur radar (10) et de l'indice de réfraction tertiaire (n3) de ladite couche tertiaire (113).

2. Ensemble de véhicule (1) selon la revendication 1, selon lequel ledit capteur radar (10) est un capteur radar à ondes millimétriques ou hyperfréquences ou micro-ondes.

3. Ensemble de véhicule (1) selon l'une quelconque des revendications précédentes, selon lequel l'indice de réfraction secondaire (n2) et l'indice de réfraction primaire (n1) sont égaux si la surface de jonction primaire (Sj1) est parallèle à la surface d'entrée (S1) et à la surface de sortie (S3) et si la couche secondaire (112) présente ledit relief (114) sur ladite surface de jonction secondaire (Sj2).

4. Ensemble de véhicule (1) selon l'une quelconque des revendications précédentes, selon lequel ladite couche secondaire (112) comprend une épaisseur (e2) au moins dix fois inférieure à celle (e1, e3) de la couche primaire (111) et de la couche tertiaire (113).

5. Ensemble de véhicule (1) selon l'une quelconque des revendications précédentes, selon lequel ladite couche primaire (111) est une couche optique, ladite couche secondaire (112) est une couche de film ou une couche opalescente, et ladite couche tertiaire (113) est une glace de sortie.

6. Ensemble de véhicule (1) selon l'une quelconque des revendications précédentes, selon lequel ledit agencement de couches (11) forme un logo illuminé ou un radôme.

7. Agencement de couches (11) disposé en regard d'un capteur radar (10), ledit capteur radar (10) étant configuré pour émettre des ondes radars (R1), ledit agencement de couches (11) comprenant une couche primaire (111), disposée en regard dudit capteur radar (10) et comprenant une surface d'entrée (S1) des ondes radars (R1), une couche secondaire (112) comprenant au moins un relief (114), ladite couche secondaire (112) étant adjacente à la couche primaire (111) et comprenant une surface de jonction primaire (Sj1) avec ladite couche primaire (111) et une surface de jonction secondaire (Sj2) avec une couche tertiaire (113) adjacente, et ladite couche tertiaire (113) comprenant une surface de sortie (S3) des ondes radars (R1) parallèle à ladite surface d'entrée (S1), la couche primaire (111), la couche secondaire (112), la couche tertiaire (113) comprenant respectivement un indice de réfraction primaire (n1), un indice de réfraction secondaire (n2), et un indice de réfraction tertiaire (n3),

- l'indice de réfraction secondaire (n2) et l'indice de réfraction tertiaire (n3) étant égaux si la surface de jonction primaire (Sj1) est parallèle à la surface d'entrée (S1) et à la surface de sortie (S3) et si la couche secondaire (112) présente ledit relief (114) sur ladite surface de jonction secondaire (Sj2), ou les indices de réfraction (n1, n3) des couches non adjacentes (111, 113) étant égaux si la couche secondaire (112) présente un relief (114) sur ladite surface de jonction secondaire (Sj2) et un relief (114) sur ladite surface de jonction primaire (Sj1) et si la surface de jonction primaire (Sj1) est parallèle à la surface de jonction secondaire (Sj2)

**caractérisé en ce que** ladite surface d'entrée (S1) et ladite surface de sortie (S3) sont courbes et présentent un rayon de courbure Rm=γ*E(da)max, avec E l'épaisseur de l'agencement de couches (11), (da) max une tolérance d'erreur de localisation angulaire dudit capteur radar (10), γ un facteur fonction du plus grand angle du champ de vision (FOV) dudit capteur radar (10) et de l'indice de réfraction tertiaire (n3) de ladite couche tertiaire (113).

**Patentansprüche**

1. Fahrzeuganordnung (1) für ein Fahrzeug (2), wobei die Fahrzeuganordnung (1) umfasst:

- einen Radarsensor (10), der dazu ausgestaltet ist, Radarwellen (R1) auszusenden,
- ein Schichtensystem (11), umfassend eine primäre Schicht (111), die gegenüber dem Radarsensor (10) angeordnet ist und eine Eintrittsfläche (S1) für die Radarwellen (R1) umfasst, eine sekundäre Schicht (112), die mindestens eine Erhebung (114) umfasst, wobei die sekundäre Schicht (112) an die primäre Schicht (111) angrenzt und eine primäre Verbindungsfläche (Sj1) mit der primären Schicht (111) und eine sekundäre Verbindungsfläche (Sj2) mit einer angrenzenden tertiären Schicht (113) umfasst, und wobei die tertiäre Schicht (113) eine Austrittsfläche (S3) für die Radarwellen (R1) umfasst, die parallel zu der Eintrittsfläche (S1) ist, wobei die primäre Schicht (111), die sekundäre Schicht (112), die tertiäre Schicht (113) einen primären Brechungsindex (n1), einen sekundären Brechungsindex (n2) beziehungsweise einen tertiären Brechungsindex (n3) umfassen,
- wobei der sekundäre Brechungsindex (n2) und der tertiäre Brechungsindex (n3) gleich sind, wenn die primäre Verbindungsfläche (Sj1) parallel zu der Eintrittsfläche (S1) und zu der Austrittsfläche (S3) ist und wenn die sekundäre Schicht (112) die Erhebung (114) auf der sekundären Verbindungsfläche (Sj2) aufweist, oder die Brechungsindizes (n1, n3) der nicht angrenzenden Schichten (111, 113) gleich sind, wenn die sekundäre Schicht (112) eine Erhebung (114) auf der sekundären Verbindungsfläche (Sj2) und eine Erhebung (114) auf der primären Verbindungsfläche (Sj1) aufweist und wenn die primäre Verbindungsfläche (Sj1) parallel zu der sekundären Verbindungsfläche (Sj2) ist;

**dadurch gekennzeichnet, dass** die Eintrittsfläche (S1) und die Austrittsfläche (S3) gekrümmt sind und einen Krümmungsradius Rm=γ*E(da)max aufweisen, wobei E die Dicke des Schichtensystems (11) ist, (da)max eine Winkellage-Fehlertoleranz des Radarsensors (10) ist, γ ein Faktor ist, der von dem größten Winkel des Sichtfelds (FOV) des Radarsensors (10) und von dem tertiären Brechungsindex (n3) der tertiären Schicht (113) abhängig ist.

2. Fahrzeuganordnung (1) nach Anspruch 1, wobei der Radarsensor (10) ein Radarsensor mit millimetrischen Wellen oder Hyperfrequenzen oder Mikrowellen ist.

3. Fahrzeuganordnung (1) nach einem der vorhergehenden Ansprüche, wobei der sekundäre Brechungsindex (n2) und der primäre Brechungsindex (n1) gleich sind, wenn die primäre Verbindungsfläche (Sj1) parallel zu der Eintrittsfläche (S1) und zu der Austrittsfläche (S3) ist und wenn die sekundäre Schicht (112) die Erhebung (114) auf der sekundären Verbindungsfläche (Sj2) aufweist.

4. Fahrzeuganordnung (1) nach einem der vorhergehenden Ansprüche, wobei die sekundäre Schicht (112) eine Dicke (e2) umfasst, die mindestens zehn Mal geringer als diejenige (e1, e3) der primären Schicht (111) und der tertiären Schicht (113) ist.

5. Fahrzeuganordnung (1) nach einem der vorhergehenden Ansprüche, wobei die primäre Schicht (111) eine optische Schicht ist, die sekundäre Schicht (112) eine Filmschicht oder eine opalisierende Schicht ist und die tertiäre Schicht (113) eine Austrittsscheibe ist.

6. Fahrzeuganordnung (1) nach einem der vorhergehenden Ansprüche, wobei das Schichtensystem (11) ein beleuchtetes Logo oder ein Radom bildet.

7. Schichtensystem (11), das gegenüber einem Radarsensor (10) angeordnet ist, wobei der Radarsensor (10) dazu ausgestaltet ist, Radarwellen (R1) auszusenden, das Schichtensystem (11) umfassend eine primäre Schicht (111), die gegenüber dem Radarsensor (10) angeordnet ist und eine Eintrittsfläche (S1) für die Radarwellen (R1) umfasst, eine sekundäre Schicht (112), die mindestens eine Erhebung (114) umfasst, wobei die sekundäre Schicht (112) an die primäre Schicht (111) angrenzt und eine primäre Verbindungsfläche (Sj1) mit der primären Schicht (111) und eine sekundäre Verbindungsfläche (Sj2) mit einer angrenzenden tertiären Schicht (113) umfasst, und wobei die tertiäre Schicht (113) eine Austrittsfläche (S3) für die Radarwellen (R1) umfasst, die parallel zu der Eintrittsfläche (S1) ist, wobei die primäre Schicht (111), die sekundäre Schicht (112), die tertiäre Schicht (113) einen primären Brechungsindex (n1), einen sekundären Brechungsindex (n2) beziehungsweise einen tertiären Brechungsindex (n3) umfassen,

- wobei der sekundäre Brechungsindex (n2) und der tertiäre Brechungsindex (n3) gleich sind, wenn die primäre Verbindungsfläche (Sj1) parallel zu der Eintrittsfläche (S1) und zu der Austrittsfläche (S3) ist und wenn die sekundäre Schicht (112) die Erhebung (114) auf der sekundären Verbindungsfläche (Sj2) aufweist, oder die Brechungsindizes (n1, n3) der nicht angrenzenden Schichten (111, 113) gleich sind, wenn die sekundäre Schicht (112) eine Erhebung (114) auf der sekundären Verbindungsfläche (Sj2) und eine Erhebung (114) auf der primären Verbindungsfläche (Sj1) aufweist und wenn die primäre Verbindungsfläche (Sj1) parallel zu der sekundären Verbindungsfläche (Sj2) ist

**dadurch gekennzeichnet, dass** die Eintrittsfläche (S1) und die Austrittsfläche (S3) gekrümmt sind und einen Krümmungsradius Rm=γ*E(da)max aufweisen, wobei E die Dicke des Schichtensystems (11) ist, (da)max eine Winkellage-Fehlertoleranz des Radarsensors (10) ist, γ ein Faktor ist, der von dem größten Winkel des Sichtfelds (FOV) des Radarsensors (10) und von dem tertiären Brechungsindex (n3) der tertiären Schicht (113) abhängig ist.

## Claims

1. Vehicle assembly (1) for a vehicle (2), said vehicle assembly (1) comprising:

- a radar sensor (10) configured to emit radar waves (R1),
- an arrangement of layers (11) comprising a primary layer (111), disposed facing said radar sensor (10) and comprising an input surface (S1) for the radar waves (R1), a secondary layer (112) comprising at least one relief (114), said secondary layer (112) being adjacent to the primary layer (111) and comprising a primary junction surface (Sj1) for the junction with said primary layer (111) and a secondary junction surface (Sj2) for the junction with an adjacent tertiary layer (113), and said tertiary layer (113) comprising an output surface (S3) for the radar waves (R1) parallel to said input surface (S1), the primary layer (111), the secondary layer (112), the tertiary layer (113) respectively comprising a primary refractive index (n1), a secondary refractive index (n2), and a tertiary refractive index (n3),

- the secondary refractive index (n2) and the tertiary refractive index (n3) being equal if the primary junction surface (Sj1) is parallel to the input surface (S1) and to the output surface (S3) and if the secondary layer (112) has said relief (114) on said secondary junction surface (Sj2), or the refractive indices (n1, n3) of the non-adjacent layers (111, 113) being equal if the secondary layer (112) has a relief (114) on said secondary junction surface (Sj2) and a relief (114) on said primary junction surface (Sj1) and if the primary junction surface (Sj1) is parallel to the secondary junction surface (Sj2);

**characterized in that** said input surface (S1) and said output surface (S3) are curved and have a radius of curvature Rm = $\gamma$*E(da)max, with E being the thickness of the arrangement of layers (11), (da) max being a tolerance for the error in the angular location of said radar sensor (10), $\gamma$ being a factor depending on the largest angle of the field of view (FOV) of said radar sensor (10) and on the tertiary refractive index (n3) of said tertiary layer (113).

2. Vehicle assembly (1) according to Claim 1, wherein said radar sensor (10) is a millimetre wave or a hyperfrequency wave or a microwave radar sensor.

3. Vehicle assembly (1) according to any one of the preceding claims, wherein the secondary refractive index (n2) and the primary refractive index (n1) are equal if the primary junction surface (Sj1) is parallel to the input surface (S1) and to the output surface (S3) and if the secondary layer (112) has said relief (114) on said secondary junction surface (Sj2).

4. Vehicle assembly (1) according to any one of the preceding claims, wherein said secondary layer (112) has a thickness (e2) that is at least ten times less than that (e1, e3) of the primary layer (111) and of the tertiary layer (113).

5. Vehicle assembly (1) according to any one of the preceding claims, wherein said primary layer (111) is an optical layer, said secondary layer (112) is a film layer or an opalescent layer, and said tertiary layer (113) is an output outer lens.

6. Vehicle assembly (1) according to any one of the preceding claims, wherein said arrangement of layers (11) forms an illuminated logo or a radome.

7. Arrangement of layers (11) disposed facing a radar sensor (10), said radar sensor (10) being configured to emit radar waves (R1), said arrangement of layers (11) comprising a primary layer (111), disposed facing said radar sensor (10) and comprising an input surface (S1) for the radar waves (R1), a secondary layer (112) comprising at least one relief (114), said secondary layer (112) being adjacent to the primary layer (111) and comprising a primary junction surface (Sj1) for the junction with said primary layer (111) and a secondary junction surface (Sj2) for the junction with an adjacent tertiary layer (113), and said tertiary layer (113) comprising an output surface (S3) for the radar waves (R1) parallel to said input surface (S1), the primary layer (111), the secondary layer (112), the tertiary layer (113) respectively comprising a primary refractive index (n1), a secondary refractive index (n2), and a tertiary refractive index (n3),

- the secondary refractive index (n2) and the tertiary refractive index (n3) being equal if the primary junction surface (Sj1) is parallel to the input surface (S1) and to the output surface (S3) and if the secondary layer (112) has said relief (114) on said secondary junction surface (Sj2), or the refractive indices (n1, n3) of the non-adjacent layers (111, 113) being equal if the secondary layer (112) has a relief (114) on said secondary junction surface (Sj2) and a relief (114) on said primary junction surface (Sj1) and if the primary junction surface (Sj1) is parallel to the secondary junction surface (Sj2),

**characterized in that** said input surface (S1) and said output surface (S3) are curved and have a radius of curvature Rm = $\gamma$*E(da)max, with E being the thickness of the arrangement of layers (11), (da) max being a tolerance for the error in the angular location of said radar sensor (10), $\gamma$ being a factor depending on the largest angle of the field of view (FOV) of said radar sensor (10) and on the tertiary refractive index (n3) of said tertiary layer (113).

[Fig. 1]

[Fig. 2]

[Fig. 3]

[Fig. 4]

[Fig. 5]

[Fig. 6]

**EP 4 256 375 B1**

**RÉFÉRENCES CITÉES DANS LA DESCRIPTION**

**Documents brevets cités dans la description**

- US 2007109206 A1